# EUROPEAN PATENT APPLICATION

(11) **EP 2 096 887 A1**
(43) Date of publication of application: **02.09.2009**
(21) Application number: 08152156.9
(22) Date of filing: 29.02.2008
(51) Int. Cl.: H04W 16/00

(54) **Apparatus and method for coverage hole detection, and uplink reporting**

(71) Applicant: Nokia Siemens Networks Oy, 02610 Espoo (FI)
(72) Inventor: Döttling, Martin, 85579 Neubiberg (DE); Färber, Michael, 82515 Wolfratshausen (DE); Lobinger, Andreas, 83734 Hausham (DE); Viering, Ingo, 81539 München (DE)
(74) Representative: TBK-Patent

(57) **Abstract**

Embodiments provide methods and apparatuses configured to coverage hole detection, and/or uplink reporting of detected coverage hole.

## Description

### FIELD OF TECHNOLOGY AND BACKGROUND

The invention generally relates to communication and network elements, methods, apparatuses, systems, radio systems, radio access networks, and programs e.g. for at least one of coverage hole detection e.g. by joint base station transmission, and of reporting or informing on a detected hole, e.g. by uplink sending of information such as uplink sounding.

Some radio access systems facilitate variable bandwidth support, e.g. on OFDM, orthogonal frequency division multiplex, and OFDMA, orthogonal frequency division multiple access, air interface concepts. Examples include long-term evolution, LTE, and worldwide interoperability for microwave access, WiMAX.

An aim of radio access systems is to optimize power consumption of a base station for operational expenditure, OPEX, and ecological reasons, by means of switching off dedicated base stations, BSs, or base transceiver stations, BTSs, and re-configuring other base stations autonomously, to retain the coverage.

A BTS or node B has remarkable power consumption when active, and generates significant OPEX by its power consumption. In addition to the cost aspect for the operator, the ecological impact has to be considered.

A problem is that customary base stations may be continuously driven and are little adaptive to their traffic needs. Further even base stations totally unloaded consume primary energy. One reason is that a power amplifier with its linear requirements, caused by the applied transmission technology, requires a minimum current which is driven through the amplifier transistors to set the operational point in such a manner that the required linear behaviour is achieved. Even in an unloaded operational case the power consumption remains high. Current implementations have a factor of about two between fully loaded cell and unloaded cell. A significant part of the basic load independent power consumption is contributed by the power amplifier.

Additionally, permanent operation of controller and baseband processing cards also contribute to significant power consumption.

In offload operational periods, e.g. during night time, the power consumption continues in spite of probably serving only few users or in some cases even no active user at all. This keeps operational expenses high, and is disadvantageous regarding eco-balance and environment.

In capacity driven deployments, the base station density may be high, and in principle some of the base stations may be entirely switched off, assuming that other base stations can take over the coverage.

Problems are to retain the service reliability, to satisfy the customers, and to enable also emergency calls with high service probability. Further, to have little operator human resource involved, the procedures to adjust the coverage (e.g. by power setting, antenna tilt) should work autonomously. Pre-adjusted data base settings may be rather complex when considering all possible on/off combinations of base stations.

Further, a procedure is needed to identify a coverage hole in the service area.

If a normally continuously operated base station in a network is turned off, manually procedures and re-configurations are needed. An automatic procedure by clock timing, to switch between two network configuration and parameters, would provide an inflexible solution.

### SUMMARY

In accordance with at least one or all of the embodiments, the invention provides solutions to one, more or all of the above problems, and provides apparatus, methods, system and computer program product as defined in any one of the claims.

An apparatus is configured to provide coverage hole detection. In accordance with one, more or all of the embodiments of the invention coverage hole detection may be performed using joint base station transmission. Information on one or more detected coverage holes may be sent to a radio network such as a base station or radio network controller or Node B, e.g. by uplink sounding.

Embodiments of the invention can be applied e.g. to long-term evolution, LTE, and worldwide interoperability for microwave access, WiMAX, networks and systems but also include or are applicable to other and future mobile radio systems. OFDM, orthogonal frequency division multiplex, OFDMA, orthogonal frequency division multiple access, and other air interface concepts may be used in embodiments of the invention.

In accordance with one, more or all of the embodiments of the invention, a concept is provided where the network can turn off sectors and/or entire base stations. Further, in accordance with one, more or all of the embodiments of the invention, the network may have means to detect areas of insufficient coverage. Self organizing procedures or sub-routines, e.g. located in one or more base stations, may react to a detected insufficient coverage and initiate re-configurations by e.g. an operational and maintenance, O&M, center, to minimize coverage holes, for example by initiating or putting a disabled base station again, or newly, into operation.

In accordance with one, more or all of the embodiments of the invention, a signal such as a specific beacon signal is introduced which may be simultaneously transmitted by a number of base stations, the number including one, two or more base stations. The beacon signal may at the point of reception, for example at a terminal, be perceived as a single multipath signal.

Other objects, features and advantages of the invention will become apparent from the following description of embodiments of the invention.

### BRIEF DESCRIPTION OF DRAWINGS

Fig. 1 illustrates an embodiment of a system and apparatuses in accordance with the invention;
Fig. 2 shows an embodiment configured in accordance with an implementation of the invention;
Fig. 3 illustrates another embodiment of the invention; and
Fig. 4 shows an example of an transmission block, and
Fig. 5 shows a further embodiment of the invention.

### DESCRIPTION OF EMBODIMENTS

In this description, a coverage hole is understood as a situation in which a mobile or stationary terminal does not have radio access to a radio access network or mobile radio or mobile network for sending or receiving radio signals. Usually, in such cases the radio signals are received, if at all, with such low power that they cannot be successfully decoded.

When no radio signals are detected at all, the terminal cannot be heard or send.

Yet there may be cases that the terminal receives very weak radio signals not strong enough to establish a radio communication but indicating that a remote or badly received base station may perhaps hear a terminal.

In case a terminal, e.g. a mobile station or user equipment or fixedly installed equipment, can not decode any broadcast channel, BCH, signal, but can decode a specifically formatted compound signal perceived as a multipath signal, it may evaluate such a situation as a detected coverage hole, and may respond with an uplink, UL, signal, e.g. using its maximum power on a coded signal, formatted in time, code and frequency domain in such a way that the signal can be received over a wider range, compared to the usual terminal UL signals for user data transmission.

This uplink signal does not need to have specific information content (beside of being present or not), but may also have very little information content. Of course, the uplink signal may also carry more information in other embodiments.

In accordance with one, more or all of the embodiments of the invention, a terminal does have to determine if a lack of access is e.g. caused by a coverage hole by disabled base stations or by a hole as such, and has to avoid to send signals for an infinite time, even if it can not be heard.

Further, embodiments of the invention provide a benefit that if no base station is enabled to send coverage hole detection signals, or not even this signals can not be received as a multipath signal at the point of reception can be decoded because of too bad reception conditions, wasting energy of a terminal for sending signals in such situations can be avoided.

At least one or more embodiments of the invention create a condition so that a terminal can decide if lack of coverage is caused by a coverage hole situation by disabled cells.

A mobile station in a coverage hole may be unable to detect a broadcast channel, BCH, from a single cell. However, a signal such as a beacon signal, e.g. a filler-BCH signal or code, FIBCH, may be received from different sites, and the multiple transmissions may be treated like multi-path signals. Due to the similar content the receiver can compile a joint signal with sufficient signal strength out of the received beacon signals. By this, the terminal may be unable to decode a single broadcast channel, BCH, signal but can decode and identify the reception of the multipath signal or compound signal such as a FIBCH signal.

When the beacon signal is received, or in one or more embodiments only when this combination of the multipath signals is true or resulting in the compound signal, the terminal may respond with a hole detection signal, e.g. narrowband signal nRACH further called narrowband RACH), e.g. on a random access channel, RACH, allocation, or alternatively on another, e.g. new defined, uplink channel type with a specific timing relationship.

The hole detection signal may have the size of e.g. just a single resource block or a few resource blocks. The generated hole detection signal may comprise or consist of e.g. a few tones or signals, and may be generated using part of, or optionally the entire, mobile station PA power.

One or more embodiments of the invention can use existing random access channel, RACH, allocations, of virtual RACH allocations of the filler broadcast channel signal, FIBCH, in contrast to e.g. an approach of sending a long sequence in dedicated band requiring a separate receiver which permanently tries to trigger such signals.

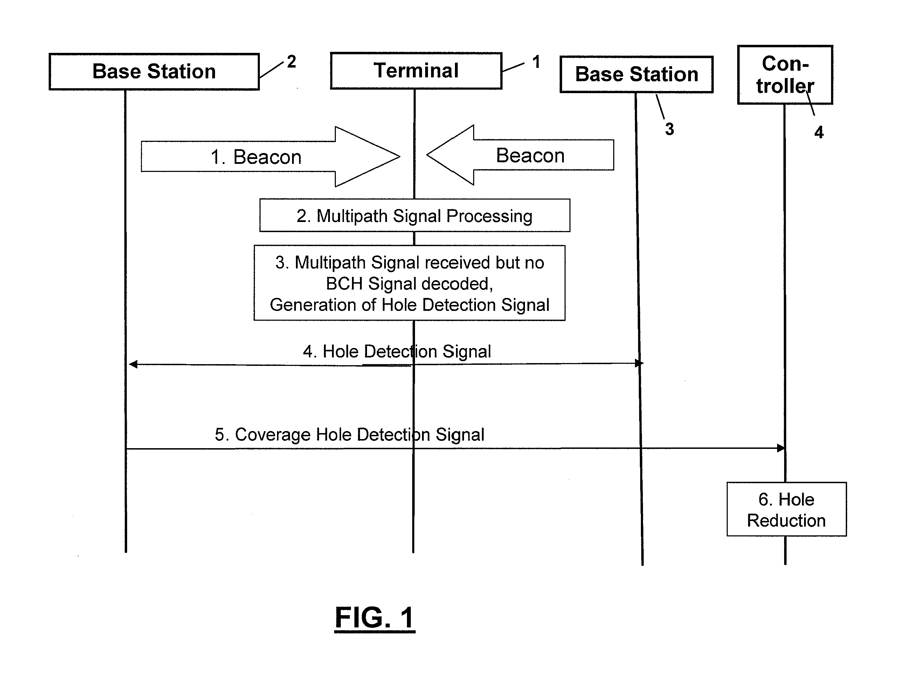

Fig. 1 illustrates an embodiment of a system and embodiments of apparatuses in accordance with the invention. Fig. 1 shows an implementation in accordance with one, more or all of the embodiments of the invention which involves at least one of the shown components such as at least one terminal 1, one or more base stations 2, 3, and a controller 4.

As shown in the embodiment of Fig. 1, at least one or more of the base stations 2, 3 is sending or broadcasting a beacon signal, e.g. a filler BCH such as described above. In case the terminal does not receive or is unable to decode a normal signal such as a BCH, or also in other or different cases, but receives the beacon signal as a composition of identical signals transmitted by more than one base station, the terminal 1 optionally performs (step 2)a multipath signal processing for better detecting the presence of even such beacon signals, which may be too weak if received only from a single base station.

In a step 3, when detecting the receipt of a filler-BCH as multipath signal coming from multiple base stations but being unable to decode a normal BCH or other signal, the terminal decides on coverage hole with existence of at least one e.g. remote but still active base station which may hear the terminal. In this case, the terminal 1 generates in step 3 a signal for informing one or more of the base stations 2, 3 on the very bad reception due to e.g. the coverage hole.

This signal is a hole detection signal which can be sent, in step 4, on the uplink channel and will be received by one or more of the base stations 2 or 3.

The base station 2 responds to the received hole detection signal of step 4 by sending, in step 5, a coverage hole detection signal to the controller 4 such as a radio network controller or node B or an operational and maintenance center.

The controller 4 may respond to the coverage hole detection signal of step 5 by initiating a coverage hole reducing or closing process 6 such as switching on a base station or changing the coverage area of one or more active base stations, as described above or below as an example.

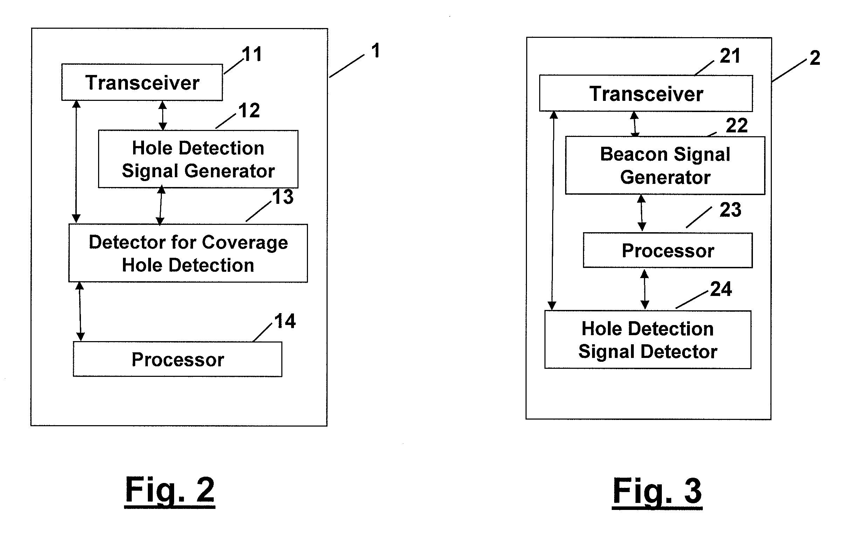

Fig. 2 illustrates an embodiment of a terminal 1 in accordance with the invention. The terminal 1 comprises a transceiver 11 for transmitting and receiving signals to and from e.g. a base station, a hole detection signal generator 12 for generating a hole detection signal when a coverage hole is detected, a detector 13 for detecting a coverage hole e.g. in the manner as described above or below, and a processor 14 for signal processing and/or controlling one or more of the components of Fig. 2 or of the terminal 1.

Fig. 3 shows an embodiment of a base station 2 or 3 in accordance with the invention. The base station 2 comprises a transceiver 21 for transmitting and receiving signals to and from e.g. the terminal 1, a beacon signal generator 22 for generating the beacon signal e.g. as described above or below, a hole detection signal detector 24 for detecting or recognizing a coverage hole detection signal received e.g. from terminal 1, and a processor 23 for signal processing and/or controlling one or more of the components of Fig. 3 or of the base station 2.

Embodiments such as described above or below allow a triggering of a receiver function in a given existing receiver structure to correlate on the uplink beacon signal.

A terminal according to one or more embodiments may have a timing relationship with the FIBCH for sending the uplink signal.

In accordance with one, more or all of the embodiments of the invention, a time domain can be used to send or receive uplink beacons or hole detection signals on different times. Further, algorithms can be introduced, in accordance with one, more or all of the embodiments of the invention, to avoid collisions from hole detection signals of multiple terminals.

In accordance with one, more or all of the embodiments of the invention, a condition can be created allowing the terminal to identify a hole situation as such, e.g. identifying a hole as being caused by a turned off base station.

The structure and changes introduced in the downlink, DL, enable a terminal to send an uplink hole detection signal to initiate re-configuration, in specific time slots. The signals, functions or devices can be fully embedded in existing structures. No extra receiver on specific bands is necessary.

One, more or all of the embodiments of the invention relate to at least one of one or more self organizing networks or apparatus, power saving, coverage reliability.

In accordance with at least one or more or all of the embodiments of the invention, the network or one or more apparatuses such as a radio network controller can turn off one or more sectors and/or entire base stations e.g. of a network, and optionally may have an apparatus or means to detect areas of insufficient coverage.

Self organizing procedures or sub-routines may be located in one or more or all base stations, and may react to one or more detected coverage holes by initiating re-configurations by an apparatus such as an operation and management, O&M, center to minimize coverage holes, or to initiate that a disabled base station is put back in operation.

A specific signal such as a beacon signal is being used or provided which is simultaneously transmitted by a number of base stations, in a network operational mode cells or base stations are turned off due to low traffic reasons The specific signal is at the point of reception perceived as a single multipath signal. In accordance with one, more or all of the embodiments of the invention, in case a terminal such as a mobile station or a stationary equipment etc., can not decode any BCH signal but can decode this beacon signal which may be a specifically formatted compound signal, the terminal may respond with an uplink, UL, signal using high or even up to its maximum terminal transmission power on a coded signal which can be received over a wider range. This uplink signal can be sent, in one or more embodiments, without specific information content (beside of being present or not), or with very little information content.

In accordance with one, more or all of the embodiments of the invention, a cell or base station with low or no traffic, may be turned off by an apparatus such as a software, SW, agent. The turning-off apparatus or agent may in turn inform one or more or all of the adjacent cells about this activity of switching off of the cell, and may also inform the operational and maintenance, O&M center.

The apparatus, agent or center may in turn activate in some or all of these adjacent cells an operational mode which interleaves, e.g. in the time domain, a second broadcast channel, BCH, type signal, on the same frequency allocation as the BCH. This second BCH is called a beacon or a filler-BCH, FIBCH, signal. The FIBCH signal has a specific content. Further, reference signals directly surrounding the FIBCH signal may also be specifically coded and different to the reference signals dedicated to this cell.

All base stations of one or more of the adjacent cells of the switched-off cell are optionally transmitting this FIBCH simultaneously in a frame synchronous manner and the coding of the FIBCH is identical. A mobile station in a coverage hole may be unable to detect a BCH from a single cell. However, the FIBCH may be received from different sites, and the multiple transmissions are treated like multi-path signals, and due to the similar content the receiver can compile a joint signal with sufficient signal strength out of the multiple transmissions. By this, even when a terminal is unable to decode a single BCH, it can decode and identify the reception of a FIBCH signal.

Only when this combination of not receiving or detecting a BCH signal but receiving a beacon or FIBCH signal is true, the terminal may judge this situation to be caused by a coverage hole, and may respond with a hole detection signal such as a narrowband signal e.g. a narrowband random access channel, nRACH, signal on a random access channel, RACH, allocation or alternatively on another new defined uplink channel type with a specific timing relationship. The hole detection signal such as the narrowband signal may have the size of e.g. a single block such as just a single resource block. The few tones or code or signals of the hole detection signal may be transmitted using high or e.g. the entire mobile station power amplifier, PA, power.

The transmit slot of the hole detection signal may be determined by an a priori knowledge of the mobile station, such as determining the RACH positions from the FIBCH positions, which have a fixed relation to the BCH positions in the time domain.

As an alternative for sending a narrowband signal, the hole detection signal sent by a terminal when detecting a coverage hole may be a code spreaded signal which may be spreaded over the entire system bandwidth.

The modulation of the tones contains a code of such a structure that in a matched receive filter, a correlation peak will appear. No terminal specific information is needed in this transmission.

However, as a variant or alternative, some uplink, UL, information tones may be coded and reserved for future use.

In accordance with one, more or all of the embodiments of the invention, one or more or all of the surrounding base stations receive the hole detection signal e.g. in a form of a burst, and may decode the correlation peak.

An algorithm may at least one of being provided in a receiving apparatus such as a base station or a part, module, chip etc of the receiving apparatus; comparing the peak in relation with the frame timing; and allocating a timing value to it.

Information on the detected peak in relation with the frame timing; or on the allocated timing value, may sent to a controller such as an O&M center together with an absolute time stamp information, or an identifier from which base station this information origins, or with both the absolute time stamp information and the identifier.

In the O&M center a database collects and stores the incoming information of the base stations.

An apparatus, function or software algorithm may use a site location data base, and may check for given time windows the occurrence of such messages from base stations which are operated in the vicinity of base stations being turned off.

The time values can be set in relation with the positions or locations of the receiving element such as a receiving node B, and a position of the terminal in a coverage hole, sending the special burst or hole detection signal, can be estimated.

The controller or O&M center has now several fundamental choices. It may put a turned off base station back into operation. Another or additional option is to modify base station parameters such as antenna tilt, output power, etc., of one or more of the surrounding cells to close the coverage gap.

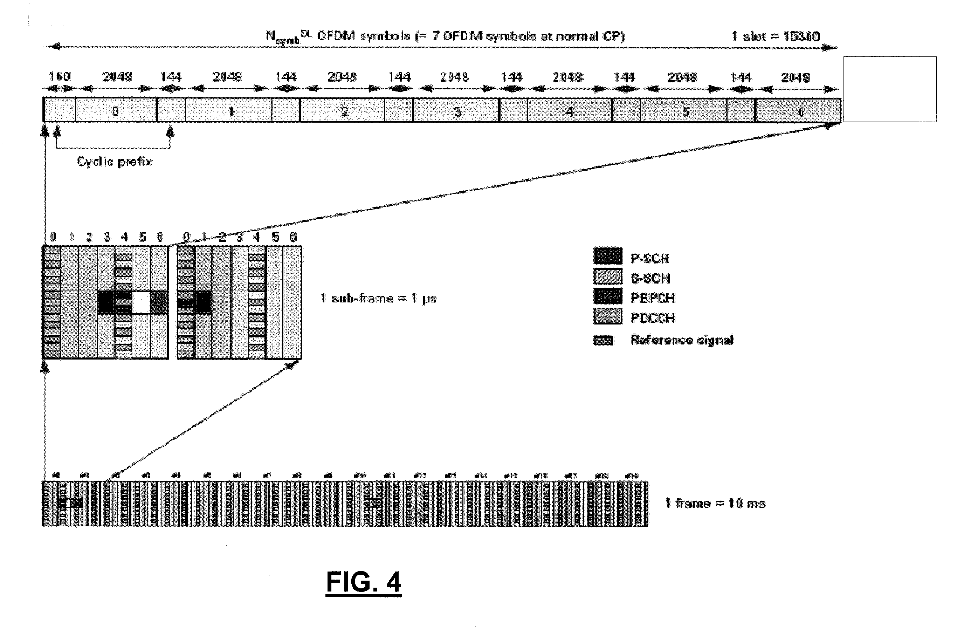

Fig. 4 shows a mapping of symbols to slots, slots to sub-frames, sub-frames to frames, and a broadcast channel, BCH mapped to the PBPCH such as shown in frame 0 and 1 with regard to an OFDM signal.

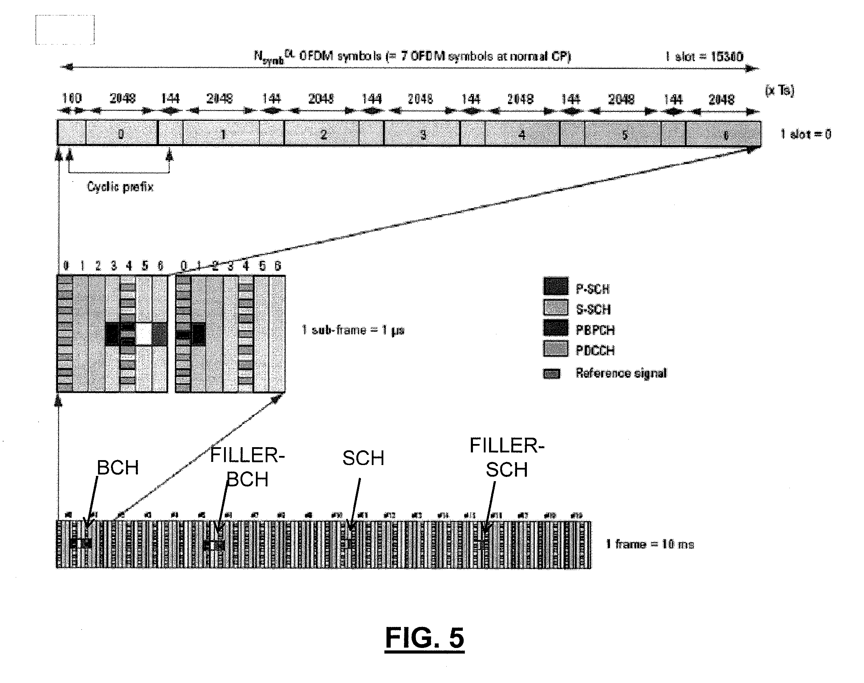

Figure 5 shows a frame sequence and frame structures in accordance with one or more embodiments of the invention, and illustrates an example of an allocation of a Filler- BCH (FIBCH) in the time domain. The allocation optionally requires that the scheduler of the cell receives or implements a limitation to use the resource blocks used for the filler BCH signal.

The frame sequence of Fig. 5 is illustrated in the lower row, with the medium row showing a frame of the sequence in enlarged view, as illustrated by the inclined lines, comprising two sub-frames. The upper row shows details of a sub-frame, illustrating symbols and lengths as well as prefixes.

In the embodiment of Fig. 5, the BCH in frame 0 and 1 is the original BCH and on frames 5 is the Filler BCH mapped on a PBPCH format, as shown and indicated by arrows.

Primary and secondary synchronizing channel, SCH, for the BCH is repeated on frame 10 and the same is done for the SCH signals of the filler BCH on the frame 15.

The positions shown in figure 5 are an example only, the precise position of the Filler BCH and its accompanying Filler-SCH is a matter of the specific mobile system (LTE, WiMAX, or others) and the specification work. The position itself is not of specific importance. The Filler BCH and BCH have a specific and generally defined offset in accordance with at least one, more or all of the embodiments of the invention. This defined offset provides an a priori knowledge in the terminal, to determine the BCH position out of a detected FIBCH. The knowledge of this timing allows also to determine the transmission time for the nRACH signal, to fit to the RACH channel position in the time domain.

In accordance with one, more or all of the embodiments of the invention, one or more terminals such as mobile stations use or implement a procedure to decide or detect cases when no BCH can be decoded, but a beacon or FIBCH received from one or more base stations has been identified. The terminal is configured to send a hole detection signal such as a nRACH burst when detecting such a case.

To avoid a system or channel, e.g. RACH channel, overload, caused e.g. by multiple terminals in a coverage hole sending frequently but infinite such hole detection signals like nRACH, and to save energy, a limitation is optionally introduced in one or more embodiments of a terminal according to the invention. A terminal, as long it is in a detected coverage hole, is only allowed to send the hole detection signal such as nRACH a finite number of times, e.g. any number between 1 and 20 or between 3 and 10 or the number 5. These transmissions optionally are not equidistant, to avoid nRACH transmit collisions with other terminals in the coverage hole. The terminal optionally randomizes the transmission time distance between the sending of the hole detection signals e.g. by using a terminal specific number like an IMSI, in an algorithm to calculate the transmit time distances, e.g. as a number of frames.

The use of this technique may be standardized. Optionally the downlink, DL, signal composition so as to include the beacon, and the joint transmission may be standardised.

Mobile terminals may be provided with specific decoding capabilities, and a feature to send a specific probing sequence.

Embodiments of the invention may be provided in or for one or more base stations, radio access networks, Node B, future LTE Nodes B, terminal implementations.

The network may be a radio access network such as a 3GPP RAN.

Embodiments of the invention allow a reduction of the primary power consumption in a network.

In an embodiment of the invention, an apparatus comprises detecting means for detecting a coverage hole, and sending means for sending a hole detection signal when detecting a coverage hole.

The apparatus may be a terminal, a module, or part of a terminal. The apparatus may comprise means for, or be configured to, at least one, or more in any arbitrary combination, of:
receiving one or more beacon signals from one or more base stations;
performing multipath signal processing of one or more received beacon signals;
checking whether one or more broadcast channel signals are received from the one or more base station;
checking whether one or more broadcast channel signals can be decoded;
deciding on coverage hole when detecting one or more beacon signals but not detecting, or being unable to decode, a broadcast channel signal;
generating the hole detection signal;
sending the hole detection signal as an uplink signal; generating the hole detection signal in the form of a burst; generating the hole detection signal in the form of a random access channel burst;
generating the hole detection signal using maximum transmission power of the apparatus;
sending a narrowband signal as the hole detection signal; sending a code spreaded signal which may be spreaded over the entire system bandwidth as a hole detection signal.

The apparatus may further or alternatively comprise means for, or be configured to, limit the number of sending the hole detection signal.

The apparatus may comprise means for, or be configured to, at least one, or more in any arbitrary combination, of:
sending the hole detection signals at least three times with different transmission time distances;
randomizing the transmission time distances;
randomizing the transmission time distances by using a terminal specific number or parameter in an algorithm to calculate the transmission time distances,
calculating the transmission time distances as a number of frames.

An embodiment of an apparatus may comprise means for generating and sending a beacon signal, and receiving means for receiving a hole detection signal from another apparatus.

The apparatus may be a base station, a module, or part of a base station.

The apparatus may comprise means for, or be configured to, at least one, or more in any arbitrary combination, of:
generating a filler broadcast channel, BCH, as beacon signal; using one or more resource blocks for the filler BCH signal; sending the filler BCH signal as a burst;
sending the filler BCH signal as a burst in a downlink frame; self organizing procedures or sub- routines located in one or more base stations reacting to a detected insufficient coverage and initiating re-configurations to reduce or minimize coverage holes;
comparing a peak of a received hole detection signal in relation with a frame timing; and
allocating a timing value to the peak.

In accordance with at least one or more or all of the embodiments of the invention, a system may comprise at least one of an apparatus as mentioned above; a scheduler of a cell for limiting the use of resource blocks reserved for the beacon signal; a controller or network configured to turn off and on sectors and/or entire base stations; means for informing one or more or all of adjacent cells about a switching off of a cell; and means for activating in one, more or all of the adjacent cells an operational mode which interleaves a beacon or a second broadcast channel type signal on a same frequency allocation as a broadcast channel, BCH.

According to one or more embodiments of the invention, a method comprises at least one of detecting a coverage hole, and sending a hole detection signal when detecting a coverage hole.

The method may comprise at least one or more, in any arbitrary combination, of:
receiving one or more beacon signals from one or more base stations;
performing multipath signal processing of one or more received beacon signals;
checking whether one or more broadcast channel signals are received from the one or more base station;
checking whether one or more broadcast channel signals can be decoded;
deciding on coverage hole when detecting one or more beacon signals but not detecting, or not being able to decode, a broadcast channel signal;
generating the hole detection signal;
sending the hole detection signal as an uplink signal; generating the hole detection signal in the form of a burst; generating the hole detection signal in the form of a random access channel burst;
generating the hole detection signal using maximum transmission power of the apparatus;
sending a narrowband signal as the hole detection signal;
sending a code spreaded signal which may be spreaded over the entire system bandwidth as the hole detection signal;
limiting the number of sending the hole detection signal;
sending the hole detection signals at least three times with different transmission time distances;
randomizing the transmission time distances;
randomizing the transmission time distances by using a terminal specific number or parameter in an algorithm to calculate the transmission time distances,
calculating the transmission time distances as a number of frames.

A method according to an embodiment may comprise at least one of generating and sending a beacon signal, and receiving a hole detection signal.

The method may comprise at least one or more, in any arbitrary combination, of:
generating a filler broadcast channel, BCH, as beacon signal; using one or more resource blocks for the filler BCH signal; sending the filler BCH signal as a burst;
sending the filler BCH signal as a burst in a downlink frame.

A computer program product may in accordance with at least one or more embodiments of the invention comprise code means configured to carry out or implement, when run on a processor, a method as defined above. The computer program product may be embodied on a computer-readable medium such as a data carrier like a DVD, CD, Flash memory etc.

For the purpose of the present invention as described herein above, it should be noted that any access or network technology may be used which may be any technology by means of which a user equipment or terminal can access a network. The network may be any device, unit or means by which a mobile or stationary entity or other user equipment may connect to and/or utilize services offered by the network. Such services may include, among others, data and/or (audio-) visual communication, data download etc.

Generally, the present invention is also applicable in those network/terminal environments relying on a data packet based transmission scheme according to which data are transmitted in data packets and which are for example based on the Internet Protocol IP. The present invention is, however, not limited thereto, and any other present or future protocol or system is also applicable. The terminal or user equipment entity may be any device, unit or means by which a system user may experience services from a network.

The sequence of method steps described above or shown in the drawings can be implemented in any other sequence arbitrarily deviating from the above described or shown sequence of steps, and may include less or more than the described and shown steps.

The method steps may be implemented as software code portions and be run using a processor at a network element or terminal, can be software code independent, or can be specified using any known or future developed programming language as long as the functionality defined by the method steps is preserved. Generally, any method step is suitable to be implemented as software or by hardware without changing the idea of the present invention in terms of the functionality implemented.

Method steps and/or devices, units or means may be implemented as hardware components at a mobile station or network element or module thereof, may be hardware independent, and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. Devices, units or means (e.g. user equipment, CSCF) can be implemented as individual devices, units or means, but may also be implemented in a distributed fashion throughout a system, as long as the functionality of the device, unit or means is preserved.

## Claims

1. An apparatus, comprising detecting means (13) for detecting a coverage hole, and sending means (11, 12) for sending a hole detection signal when detecting a coverage hole, further comprising means for, or being configured to, at least one of:
receiving one or more beacon signals from one or more base stations;
performing multipath signal processing of one or more received beacon signals;
checking whether one or more broadcast channel signals are received from the one or more base station;
checking whether one or more broadcast channel signals can be decoded;
deciding on coverage hole when detecting one or more beacon signals but not detecting, or being unable to decode, a broadcast channel signal.

2. Apparatus according to claim 1 wherein the apparatus is a terminal, a module, or part of a terminal.

3. Apparatus according to claim 1 or 2, comprising means for, or being configured to, at least one of:
generating the hole detection signal;
sending the hole detection signal as an uplink signal;
generating the hole detection signal in the form of a burst;
generating the hole detection signal in the form of a random access channel burst;
generating the hole detection signal using maximum transmission power of the apparatus;
sending a narrowband signal as the hole detection signal;
sending a code spreaded signal which may be spreaded over the entire system bandwidth as a hole detection signal.

4. Apparatus according to any one of the preceding claims, wherein the apparatus (1) comprises means for, or is configured to, limit the number of sending the hole detection signal.

5. Apparatus according to any one of the preceding claims, wherein the apparatus (1) comprises means for, or is configured to, at least one of:
sending the hole detection signals at least three times with different transmission time distances;
randomizing the transmission time distances;
randomizing the transmission time distances by using a terminal specific number or parameter in an algorithm to calculate the transmission time distances,
calculating the transmission time distances as a number of frames.

6. An apparatus, comprising means (21, 22) for generating and sending a beacon signal, and receiving means (21) for receiving a hole detection signal from another apparatus.

7. Apparatus according to claim 6, wherein the apparatus is a base station (2, 3), a module, or part of a base station.

8. Apparatus according to claim 6 or 7, wherein the apparatus comprises means for, or is configured to, at least one of:
generating a filler broadcast channel, BCH, as beacon signal;
using one or more resource blocks for the filler BCH signal;
sending the filler BCH signal as a burst;
sending the filler BCH signal as a burst in a downlink frame;
self organizing procedures or sub- routines located in one or more base stations reacting to a detected insufficient coverage and initiating re-configurations to reduce or minimize coverage holes;
comparing a peak of a received hole detection signal in relation with a frame timing; and
allocating a timing value to the peak.

9. System comprising at least one of an apparatus according to any one of claims 1 to 5; an apparatus according to any one of claims 6 to 8; a scheduler of a cell for limiting the use of resource blocks reserved for the beacon signal; a controller or network configured to turn off and on sectors and/or entire base stations; means for informing one or more or all of adjacent cells about a switching off of a cell; and means for activating in one, more or all of the adjacent cells an operational mode which interleaves a beacon or a second broadcast channel type signal on a same frequency allocation as a broadcast channel, BCH.

10. A method, comprising at least one of detecting a coverage hole, and sending a hole detection signal when detecting a coverage hole, further comprising at least one of:
receiving one or more beacon signals from one or more base stations;
performing multipath signal processing of one or more received beacon signals;
checking whether one or more broadcast channel signals are received from the one or more base station;
checking whether one or more broadcast channel signals can be decoded;
deciding on coverage hole when detecting one or more beacon signals but not detecting, or not being able to decode, a broadcast channel signal.

11. The method according to claim 10,
generating the hole detection signal;
sending the hole detection signal as an uplink signal;
generating the hole detection signal in the form of a burst;
generating the hole detection signal in the form of a random access channel burst;
generating the hole detection signal using maximum transmission power of the apparatus;
sending a narrowband signal as the hole detection signal;
sending a code spreaded signal which may be spreaded over the entire system bandwidth as the hole detection signal;
limiting the number of sending the hole detection signal;
sending the hole detection signals at least three times with different transmission time distances;
randomizing the transmission time distances;
randomizing the transmission time distances by using a terminal specific number or parameter in an algorithm to calculate the transmission time distances,
calculating the transmission time distances as a number of frames.

12. A method, comprising at least one of generating and sending a beacon signal, and receiving a hole detection signal.

13. The method according to claim 12, comprising at least one of:
generating a filler broadcast channel, BCH, as beacon signal;
using one or more resource blocks for the filler BCH signal;
sending the filler BCH signal as a burst;
sending the filler BCH signal as a burst in a downlink frame.

14. Computer program product, comprising code means configured to carry out or implement, when run on a processor, a method as defined in any one of claims 10 to 13.

15. Computer program product according to claim 14, embodied on a computer-readable medium.
